(19) Europäisches Patentamt
European Patent Office
Office européen des brevets

(11) Veröffentlichungsnummer: **0 190 692**
**B1**

(12) # EUROPÄISCHE PATENTSCHRIFT

(45) Veröffentlichungstag der Patentschrift: **04.10.89**

(51) Int. Cl.⁴: **C 09 B 57/04** //
C09D11/02, C09D1/00, C08K5/34

(21) Anmeldenummer: **86101341.5**

(22) Anmeldetag: **03.02.86**

(54) **Bis-isoindolinpigmente und ihre Verwendung.**

(30) Priorität: **05.02.85 DE 3503776**

(43) Veröffentlichungstag der Anmeldung:
**13.08.86 Patentblatt 86/33**

(45) Bekanntmachung des Hinweises auf die Patenterteilung:
**04.10.89 Patentblatt 89/40**

(84) Benannte Vertragsstaaten:
**CH DE FR GB IT LI**

(56) Entgegenhaltungen:
**DE-A-2 924 142**
**FR-A-1 537 299**
**FR-A-2 168 378**
**JP-A-77 083 362**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch- Strasse 38, D-6700 Ludwigshafen (DE)**

(72) Erfinder: **Lotsch, Wolfgang, Dr., Stettiner Strasse 32, D-6711 Beindersheim (DE)**
Erfinder: **Bock, Gustav, Dr., Waldstrasse 16, D-6730 Neustadt (DE)**
Erfinder: **Neumann, Peter, Dr., Franz- Schubert-Strasse 1, D-6908 Wiesloch (DE)**

EP 0 190 692 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Aus der JP-A-83 362/1977 sind Farbstoffe der allgemeinen Formel

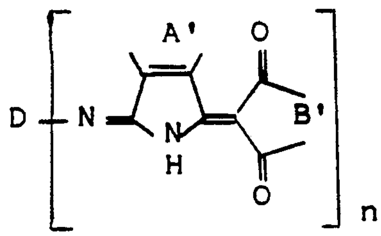

bekannt, in der A' ein o-Phenylen- oder ein 2,3-Naphthylenrest, B' ein o-Phenylen, 2,3-Naphthylen oder 1,8-Naphthylenrest, die gegebenenfalls durch bis zu 4 Chlor substituiert sind, D ein aromatischer oder heterocyclischer Rest und n 1 oder 2 bedeuten.

Farbstoffe mit n = 2 werden in den Beispielen 9 bis 13 und 80 bis 98 beschrieben.

Charakteristisch für die Farbstoffe der JP-A- ist, daß diese - je nachdem, ob n = 1 oder 2 ist - eine oder zwei der Gruppen

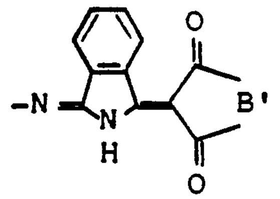

tragen, die durch Kondensation einer entsprechenden Isoindoleninverbindung mit einem Indandion-1,3 erhalten wird.

Aufgabe der vorliegenden Erfindung war es, in den anwendungstechnischen Eigenschaften verbesserte Isoindolinpigmente bereitzustellen.

Die Erfindung betrifft Bis-isoindolinpigmente der Formel (I)

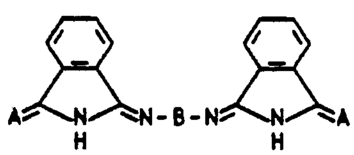 (I),

in der

A für gleiche oder verschiedene Reste der Formel

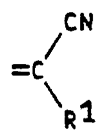 und

B für

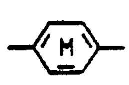 , 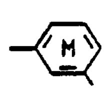 , 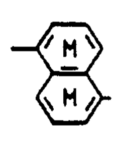 , 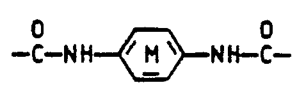 ,

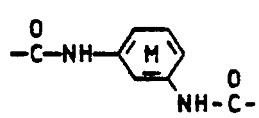 oder 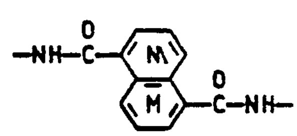 stehen und

worin $R^1$ Cyan, Carbamoyl, $C_1$- bis $C_4$-Alkylcarbamoyl, Phenylcarbamoyl, wobei der Phenylrest gegebenenfalls durch Chlor, Brom, $C_1$- bis $C_4$-Alkyl, Nitro, $C_1$- bis $C_4$-Alkoxy oder $C_1$- bis $C_4$-Alkoxycarbonyl substituiert ist,

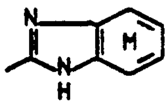 , 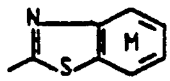 oder 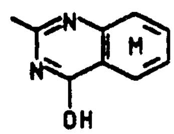 bedeutet

und die Ringe M die gegebenenfalls durch Chlor, Brom, Nitro, $C_1$-$C_6$-Alkyl und/oder $C_1$-$C_6$-Alkoxy substituiert sind.

Bevorzugt sind Bis-isoindolinpigmente der Formel (II)

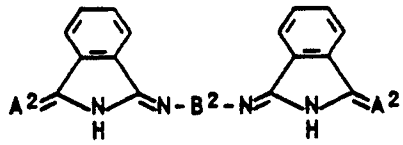 (II),

in der $A^2$ für gleiche oder verschiedene Reste der Formeln

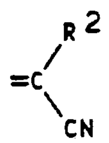 , 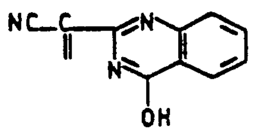 , 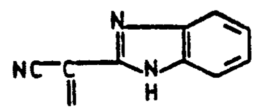 oder 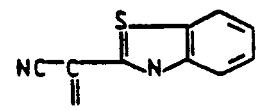 ,

und $B^2$ für gegebenenfalls durch Methyl, Ethyl, Methoxy, Ethoxy, Chlor oder Brom substituiertes 1,4- oder 1,3-Phenylen stehen und worin $R^2$ Cyan, Carbamoyl, N-Methylcarbamoyl, N-Ethylcarbamoyl oder durch Chlor, Brom, Methyl, Methoxy oder Carbomethoxy substituiertes Phenylcarbamoyl bedeutet.

Im Vergleich zu den aus der JP-A-83 362/1977 bekannten Bisisoindolinpigmenten sind die Verbindungen (I) den ersteren in den anwendungstechnischen Eigenschaften überlegen. So ist das Pigment der Formel (I), in der B p-Phenylen und A jeweils Cyan-N-methylcarbamoylmethylen ist, den Pigmenten der JP-A, Beispiele 80 und 83, in Polyethylen in der Temperaturbeständigkeit deutlich überlegen. Während das Pigment gemäß der Erfindung noch bei Temperaturen von 280°C unverändert bleibt, beginnen die Pigmente der JP-A sich bereits bei Temperaturen ab 220°C zu zersetzen.

Von besonderem Interesse sind die Verbindungen der Formeln (I) und (II) bei denen beide A bzw. $A^2$ gleich sind.

Ganz besonders hervorzuheben sind Bis-isoindolinpigmente der Formel (III)

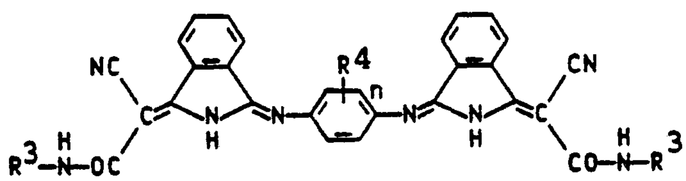 (III),

worin $R^3$ für Methyl oder Ethyl, $R^4$ für Methyl, Ethyl, Methoxy, Ethoxy oder Chlor und n für 0, 1 oder 2 stehen und wobei bei $n = 2$ die Reste $R^4$ gleich oder verschieden sein können.

Als $C_1$- bis $C_6$-Alkyl, vorzugsweise $C_1$- bis $C_4$-Alkyl sind im einzelnen z. B. zu nennen: Methyl, Ethyl, n- und i-Propyl, n- und i-Butyl, Butyl-2, tert-Butyl, Pentyl, Hexyl oder 2,2-Dimethylbutyl. Für $C_1$- bis $C_6$-Alkoxy, bevorzugt sind $C_1$- bis $C_4$-Alkoxy, kommen z. B. in Betracht: Methoxy, Ethoxy n- und i-Propoxy, n- und i-Butoxy, Pentoxy und Hexoxy, von denen Methoxy und Ethoxy besonders bevorzugt sind.

Die Herstellung der Verbindungen der Formel (I) kann je nach dem Rest -B- durch stufenweises Umsetzen von Verbindungen der Formel

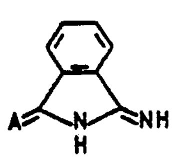 (IV)

mit Diaminen der Formel $H_2N$-B-$NH_2$ (V) oder im Falle, des Restes B

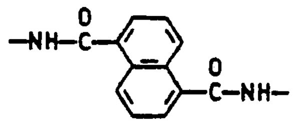

durch Umsetzen mit dem Hydrazid der entsprechenden Dicarbonsäure unter Abspaltung von Ammoniak erfolgen.

Verbindungen (I), in denen B für Reste der Formeln

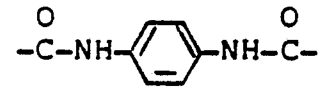 oder 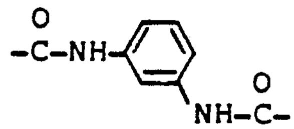

steht, können durch stufenweise Reaktion der Verbindungen (IV) mit den entsprechenden Diisocyanaten erhalten werden.

Die Umsetzungen werden zweckmäßig in inerten organischen Lösungsmitteln bei Temperaturen von 20 bis 150° C, vorzugsweise zwischen 50 und 120° C durchgeführt.

Geeignete organische Lösungsmittel sind Alkohole wie Methanol, Ethanol, Amylalkohol oder Glykolmonoalkylether; Aromaten wie Chlorbenzol, Nitrobenzol oder Toluol: amidische Lösungsmittel wie Formamid, N,N-Dimethylformamid oder N-Methylpyrrolidon; oder Säuren wie Ameisensäure oder Essigsäure.

Für die Umsetzungen mit Diisocyanaten können aromatische Kohlenwasserstoffe wie Xylol, Toluol, Chlorbenzol oder Nitrobenzol oder N,N-Dimethylformamid verwendet werden.

Unsymmetrische Verbindungen (I), d.h. beide Reste A sind verschieden, werden durch Kondensation von Gemischen der Verbindungen der Formel (IV) erhalten.

Solche unsymmetrische Verbindungen (I) können auch durch Umsetzen einer Verbindung der Formel (IV) mit einer Nitroaminoverbindung $H_2N$-B-$NO_2$ (Va) zu

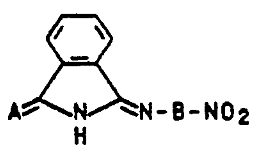 (VI)

die nach Reduktion zur entsprechenden Aminoverbindung mit einer weiteren Verbindung (IV) (in der A von dem A der Formel (VI) verschieden ist) zu den unsymmetrischen Verbindung (I) kondensiert wird, hergestellt werden.

Die Herstellung der Salze bzw. Komplexe der Verbindungen der Formel (I) erfolgt nach an sich bekannten Verfahren, beispielsweise indem man die Verbindungen mit den entsprechenden Metallsalzen in N,N-Dimethylformamid, N-Methylpyrrolidon oder Formamid einige Zeit (ca. 5 bis 10 h) auf höhere Temperatur (ca. 140° C) erhitzt.

Die Verbindungen der Formel (I) fallen in einer für die Pigmentanwendung geeigneten Form an oder können durch an sich bekannte Nachbehandlungsverfahren in die geeignete Form überführt werden, z. B. durch Mahlen mit oder ohne Mahlhilfsstoffe, wie anorganischen Salzen, gegebenenfalls in Anwesenheit von Lösungsmitteln, wie Toluol, Xylol, Dichlorbenzol oder N-Methylpyrrolidon. Farbstärke und Transparenz des Pigmentes können durch Variation der Nachbehandlung beeinflußt werden.

Die Farbmittel der Formel (I) eignen sich aufgrund ihrer Licht- und Migrationsechtheit für die verschiedensten Pigmentapplikationen. So können sie zur Herstellung von sehr echt pigmentierten Systemen, wie Mischung mit anderen Stoffen, Zubereitungen, Anstrichmitteln, Druckfarben, gefärbtem Papier und gefärbten makromolekularen Stoffen verwendet werden. Unter Mischung mit anderen Stoffen können z. B. solche mit anorganischen Weißpigmenten wie Titandioxid (Rutil) oder mit Zement verstanden werden. Zubereitungen sind z. B. Flushpasten mit organischen Flüssigkeiten oder Teige und Feinteige mit Wasser, Dispergiermitteln und gegebenenfalls Konservierungsmitteln. Die Bezeichnung Anstrichmittel steht z. B. für physikalisch oder oxidativ trocknende Lacke, Einbrennlacke, Reaktionslacke, Zweikomponentenlacke, Dispersionsfarben für wetterfeste Überzüge und Leimfarben. Unter Druckfarben sind solche für den Papier-, Textil- und Blechdruck zu verstehen. Die makromolekularen Stoffe können natürlichen Ursprungs sein wie Kautschuk, durch chemische Modifikation erhalten werden wie Acetylcellulose, Cellulosebutyrat oder Viskose oder synthetisch erzeugt werden wie Polymerisate, Polyadditionsprodukte und Polykondensate. Genannt seien thermoplastische Massen wie Polyvinylchlorid, Polyvinylacetat, Polyvinylpropionat, Polyolefine, z. B. Polyethylen oder Polyamide, Superpolyamide, Polymerisate und Mischpolymerisate aus Acrylester, Methacrylestern, Acrylnitril, Acrylamid, Butadien, Styrol sowie Polyurethane und Polycarbonate. Die mit den beanspruchten Produkten pigmentierten Stoffe können in beliebiger Form vorliegen.

Die Pigmente der Formel (I) sind weiterhin ausgezeichnet wasserecht, ölecht, säureecht, kalkecht, alkaliecht,

lösungsmittelecht, überlackierecht, überspritzecht, sublimierecht, hitzebeständig, vulkanisierbeständig, sehr ergiebig und in plastischen Massen gut verteilbar.

Die folgenden Ausführungsbeispiele sollen die Erfindung zusätzlich erläutern. Die angegebenen Teile sind Gewichtsteile.

**Beispiel 1**

45 Teile 1-Imino-3-(cyan-N-methylcarbamoyl-methylen)-isoindolin und 11 Teile p-Phenylendiamin werden in 700 Teilen Eisessig fünf Stunden bei 110° C gerührt. Nach dem Abkühlen auf 70° C wird filtriert, mit Eisessig und Methanol gewaschen und getrocknet. Man erhält 47 Teile einer Verbindung der Formel

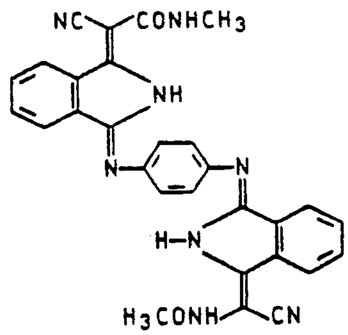

(VII)

die in Lacken eingearbeitet farbstarke, deckende und brillante Orangefärbungen mit guter Lichtechtheit liefert.

**Beispiel 2 - 56**

Man verfährt wie in Beispiel 1, verwendet jedoch anstelle von 1-Amino-3-(cyan-N-methylcarbamoyl-methylen(isoindolin und p-Phenylendiamin Isoindolinverbindungen der Formel

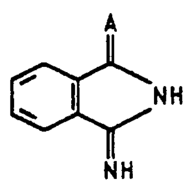

(IV)

und Diamine der Formel

$H_2N - B - NH_2$ (V)

worin A und -B- die in der folgenden Tabelle angegebene Bedeutung haben. Man erhält Pigmente, die im Lack Färbungen in den in Spalte 4 angegebenen Farbtönen liefern und die vergleichbare Eigenschaften haben.

| Beispiel | A | —B— | Farbton |
|---|---|---|---|
| 2 | 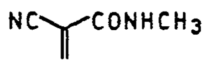 | 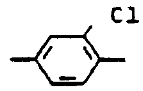 | gelb |
| 3 | " | 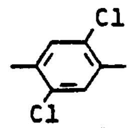 | gelb |
| 4 | " | 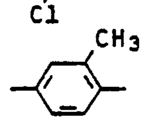 | rot |
| 5 | " | 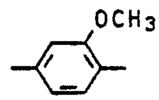 | rot |
| 6 | " | 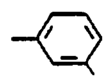 | gelb |
| 7 | 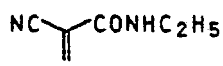 | 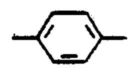 | orange |
| 8 | " | 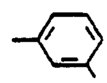 | gelb |
| 9 | 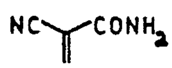 | 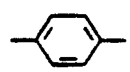 | gelb |
| 10 | " | 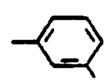 | gelb |
| 11 | 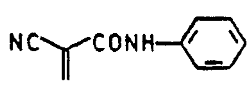 | 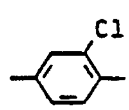 | rot |

| Beispiel | A | –B– | Farbton |
|---|---|---|---|
| 12 | 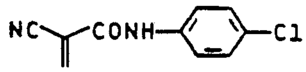 | 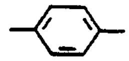 | rot |
| 13 | ″ | 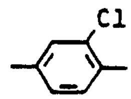 | rot |
| 14 | ″ | 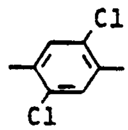 | rot |
| 15 | ″ | 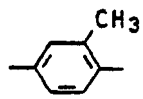 | rot |
| 16 | ″ | 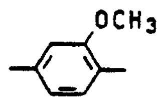 | marron |
| 17 | 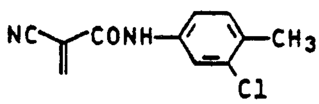 | 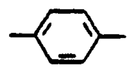 | rot |
| 18 | 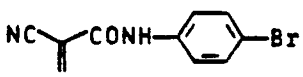 | 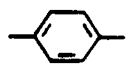 | orange |
| 19 | 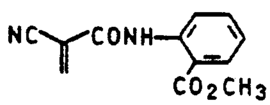 | 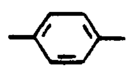 | gelb |
| 20 | 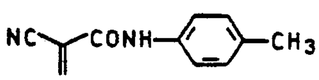 | 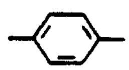 | rot |
| 21 | 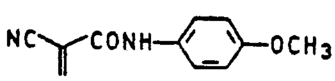 | 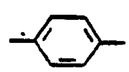 | marron |
| 22 | 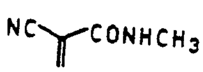 | 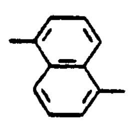 | orange |

| Beispiel | A | —B— | Farbton |
|---|---|---|---|
| 23 | 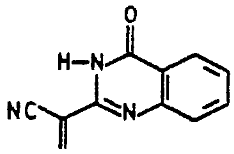 | 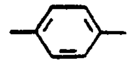 | orange |
| 24 | 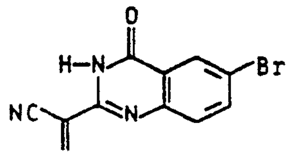 | 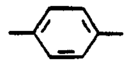 | orange |
| 25 | 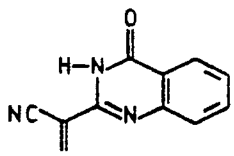 | 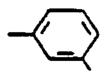 | gelb |
| 26 | 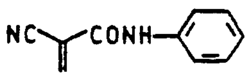 | 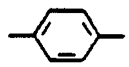 | orange |
| 27 | " | 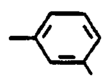 | gelb |
| 28 | 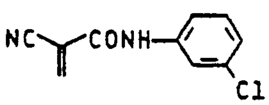 | 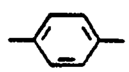 | orange |
| 29 | " | 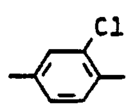 | orange |

| Beispiel | A | -B- | Farbton |
|---|---|---|---|
| 30 | 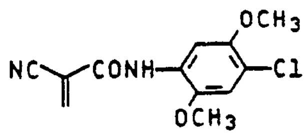 | 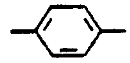 | braun |
| 31 | 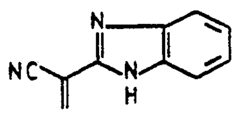 | 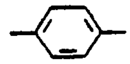 | rot |
| 32 | 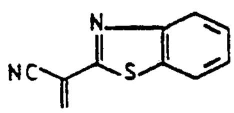 | 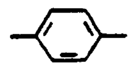 | rot |
| 33 | 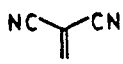 | 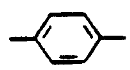 | orange |

**Beispiel 34**

45 Teile 1-Imino-3-(cyan-N-methylcarbamoyl-methylen)-isoindolin und 16 Teile P-Phenylendiisocyanat werden in 600 Teilen Dimethylformamid fünf Stunden bei 150°C gerührt. Nach dem Abkühlen auf 70°C wird filtriert, mit Dimethylformamid und Methanol gewaschen und getrocknet. Man erhält 40 Teile einer Verbindung der Formel

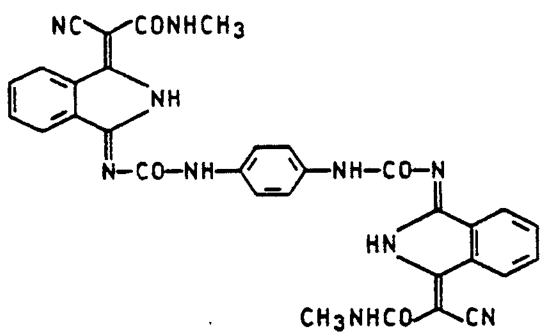

(XVII)

die in Lacken eingearbeitet farbstarke, deckende Rotfärbungen mit guten Migrationsechtheiten ergibt.

**Beispiele 35 - 40**

Es wird wie in Beispiel 34 verfahren, jedoch verwendet man anstelle von 1-Imino-3-(cyan-N-methylcarbamoyl-methylen)-isoindolin und p-Phenylendiisocyanat Isoindolinverbindungen der Formel XI und Diisocyanate der Formel

$$O = C = N - B^1 - N = C = O$$

worin A und $B^1$ die in der folgenden Tabelle angegebenen Bedeutung haben. Die Pigmente färben Lacke in den in Spalte 4 angegebenen Farbtönen. Die Pigmenteigenschaften sind mit denen des nach Beispiels 34 erhaltenen vergleichbar.

| Beispiel | A | 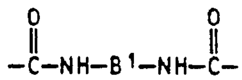 | Farbton |
|---|---|---|---|
| 35 | 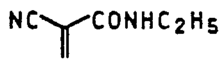 | 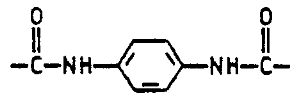 | rot |
| 36 | 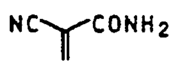 | " | braun |
| 37 | 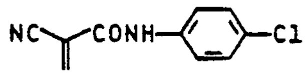 | " | orange |
| 38 | 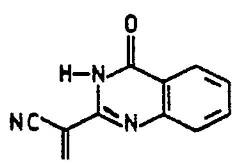 | 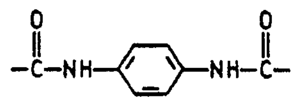 | braun |
| 39 | 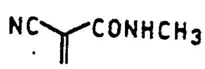 | 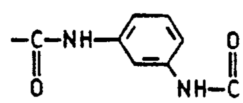 | gelb |
| 40 | 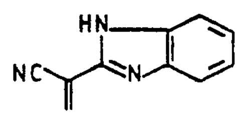 | 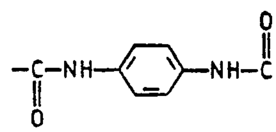 | rot |

**Anwendungsbeispiele**

a) Lack

10 Teile des nach Beispiel 1 erhaltenen Farbstoffes und 95 Teile Einbrennlackmischung, die 70 % Kokosalkydharz (60 %-ig in Xylol gelöst und 30 % Melaminharz (ungefähr 55 %-ig gelöst in Butanol/Xylol) enthält, werden in einem Attritor angerieben. Nach dem Auftragen und einer Einbrennzeit von 30 Minuten bei 120°C werden orangefarbene Volltonlackierungen mit guter Licht- und Überspritzechtheit erhalten. Durch Zumischen von Titandioxyd werden orangefarbene Weißaufhellungen erzielt.

Verwendet man die in den Beispielen 2 bis 40 beschriebenen Farbstoffe, so werden Lackierungen in ähnlichen Farbtönen und ähnlichen Eigenschaften erhalten,

b) Kunststoff

0,5 Teile des nach Beispiel 1 erhaltenen Farbstoffs werden auf 100 Teile Polystyrolgranulat (Standard-Marke) aufgetrommelt. Das angefärbte Granulat wird durch Extrudieren homogenisiert (190 bis 195°C). Man erhält orangefarbene Extrudate, deren Färbung gute Lichtechtheit aufweist.

Verwendet man eine Mischung aus 0,5 Teilen Farbstoff und 1 Teil Titandioxyd, so erhält man deckende orangefarbene Färbungen. Verwendet man die Pigmentfarbstoffe, die nach den Beispielen 2 bis 40 erhalten werden, so erhält man analoge Färbungen.

c) Druckfarbe

8 Teile des nach Beispiel 1 erhaltenen Pigmentfarbstoffes, 40 Teile eines mit Phenol/Formaldehyd modifizierten Kolophoniumharzes und 55 bis 65 Teile Toluol werden in einem Dispergieraggregat innig vermischt. Man erhält eine orangefarbene Toluol-Tiefdruckfarbe. Die mit dieser Farbe erhaltenen Drucke weisen gute Lichtechtheit auf. Bei Verwendung der Farbstoffe aus den Beispielen 2 bis 40 werden ähnliche Ergebnisse erhalten.

**Patentansprüche**

1. Bis-isoindolinpigmente der Formel

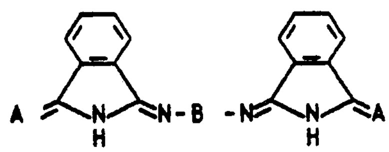

in der

A für gleiche oder verschiedene Reste der Formel

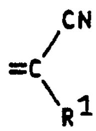 und

B für

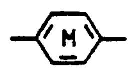 , 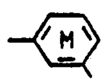 , 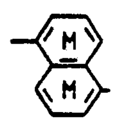 , 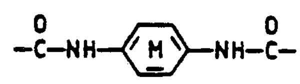 ,

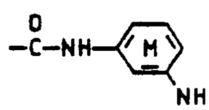 oder 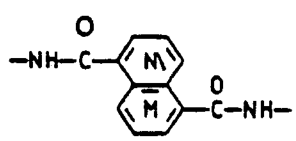 stehen und

worin $R^1$ Cyan, Carbamoyl, $C_1$- bis $C_4$-Alkylcarbamoyl, Phenylcarbamoyl, wobei der Phenylrest gegebenenfalls durch Chlor, Brom, $C_1$- bis $C_4$-Alkyl, Nitro, $C_1$- bis $C_4$-Alkoxy oder $C_1$- bis $C_4$-Alkoxycarbonyl substituiert ist,

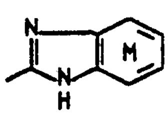 , 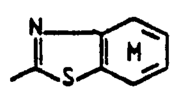 oder 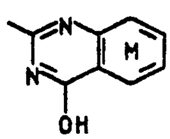 bedeutet

und die Ringe M gegebenenfalls durch Chlor, Brom, Nitro, $C_1$- bis $C_6$-Alkyl und/oder $C_1$- bis $C_6$-Alkoxy substituiert sind.

2. Bis-isoindolinpigmente gemäß Anspruch 1, dadurch gekennzeichnet, daß die Ringe N unsubstituiert oder durch Chlor, Brom, Methyl, Ethyl, Methoxy und/oder Ethoxy substituiert sind.

3. Bis-isoindolinpigmente gemäß Anspruch 1 oder 2, dadurch gekennzeichnet, daß beide Reste A gleich sind.

4. Bis-isoindolinpigmente gemäß Anspruch 1, gekennzeichnet durch die Formel

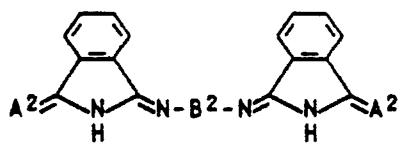

in der $A^2$ für gleiche oder verschiedene Reste der Formeln:

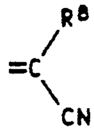 , 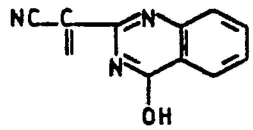 , 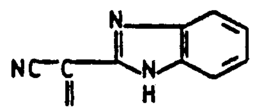 oder 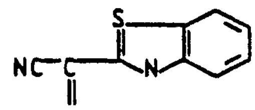 .

und $B^2$ für gegebenenfalls durch Methyl, Ethyl, Methoxy, Ethoxy, Chlor oder Brom substituiertes 1,1- oder 1,3-Phenylen stehen, worin $R^8$ Cyan, Carbamoyl, N-Methylcarbamoyl, N-Ethylcarbamoyl oder durch Chlor, Brom, Methyl, Methoxy oder Methoxycarbonyl substituiertes Phenylcarbamoyl bedeutet.

5. Bis-isoindolinpigment gemäß Anspruch 4, dadurch gekennzeichnet, daß die Reste $A^2$ gleich sind.

6. Bis-isoindolinpigment gemäß Anspruch 1, gekennzeichnet durch die Formel:

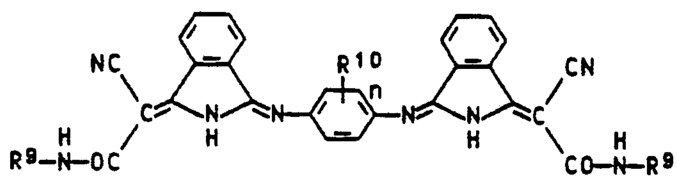

worin $R^9$ für Methyl oder Ethyl, $R^{10}$ für Methyl, Ethyl, Methoxy, Ethoxy oder Chlor und n für 0, 1 oder 2 stehen und wobei bei n = 2 die Reste $R^{10}$ gleich oder verschieden sein können.

7. Verwendung der Bis-isoindolinpigmente gemäß den Ansprüchen 1 bis 6 zum Pigmentieren von Kunststoffen, Druckfarben und Lacken.

**Claims**

1. A bisisoindoline pigment of the formula

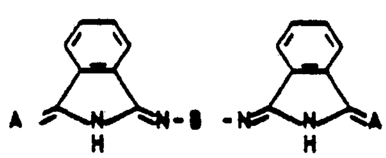

where the radicals A are identical or different radicals of the formula

10 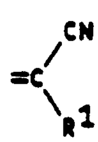 ,

B is

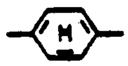 , 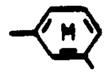 , 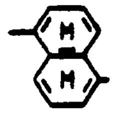 , 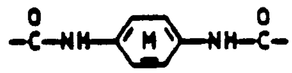 ,

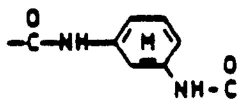 or 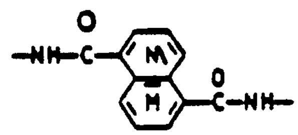 ,

$R^1$ is cyano, carbamyl, $C_1$-$C_4$-alkylcarbamyl, phenylcarbamyl, the phenyl radical being unsubstituted or substituted by chlorine, bromine, $C_1$-$C_4$-alkyl, nitro, $C_1$-$C_4$-alkoxy or $C_1$-$C_4$-alkoxycarbonyl,

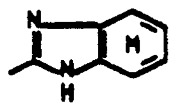 , 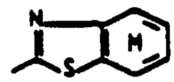 or 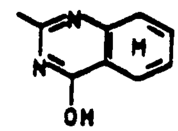

and the rings M are unsubstituted or substituted by chlorine, bromine, nitro, $C_1$-$C_6$-alkyl and/or $C_1$-$C_6$-alkoxy.

2. A bisisoindoline pigment as claimed in claim 1, wherein the rings M are unsubstituted or substituted by chlorine, bromine, methyl, ethyl, methoxy and/or ethoxy.

3. A bisisoindoline pigment as claimed in either of claims 1 and 2, wherein the two radicals A are identical.

4. A bisisoindoline pigment as claimed in claim 1, of the formula

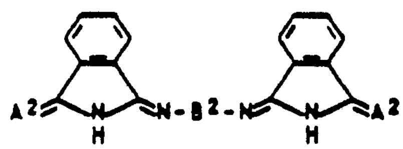

where the radicals $A^2$ are identical or different radicals of the formula

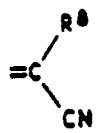 , 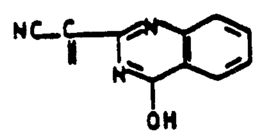 , 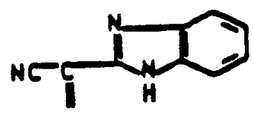 or 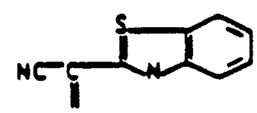 ,

$B^2$ is 1,4- or 1,5-phenylene which is unsubstituted or substituted by methyl, ethyl, methoxy, ethoxy, chlorine or bromine, and $R^8$ is cyano, carbamyl, N-methylcarbamyl or N-ethylcarbamyl or is phenylcarbamyl which is substituted by chlorine, bromine, methyl, methoxy or methoxycarbonyl.

5. A bisisoindoline pigment as claimed in claim 4, wherein the radicals $A^2$ are identical.

6. A bisisoindoline pigment as claimed in claim 1, of the formula:

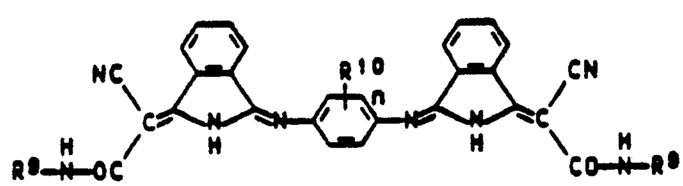

where $R^9$ is methyl or ethyl, $R^{10}$ is methyl, ethyl, methoxy, ethoxy or chlorine and n is 0, 1 or 2, and, when n is 2, the radicals $R^{10}$ can be identical or different.

7. Use of a bisisoindoline pigment as claimed in any of claims 1 to 6 for pigmenting plastics printing inks and surface coatings.

**Revendications**

1. Pigments de bis-iso-indoline de formule:

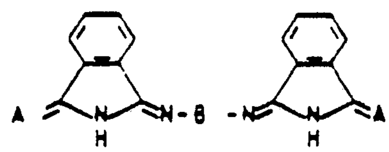

dans laquelle

A représentent des restes identiques ou différents de formule

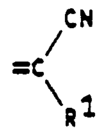

et B représente

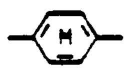 , 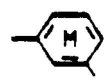 , 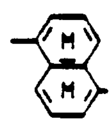 , 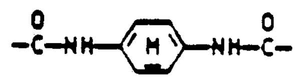

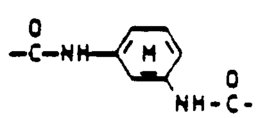 ou 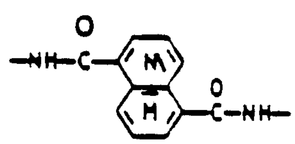

et où $R^1$ représente un groupement cyano, carbamoyle, (alkyl en $C_1$-$C_4$)carbamoyle, phénylcarbamoyle où le reste phényle est éventuellement substitué par un radical chloro, bromo, alkyle en $C_1$-$C_4$, nitro, alcoxy en $C_1$-$C_4$ ou (alcoxy en $C_1$-$C_4$)carbonyle, ou un groupement

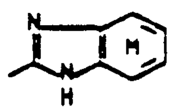 , 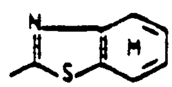 ou 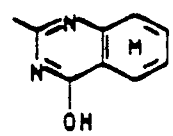

et les noyaux M sont éventuellement substitués par des radicaux chloro, bromo, nitro, alkyle en $C_1$-$C_6$ et/ou alcoxy en $C_1$-$C_6$.

2. Pigments de bis-iso-indoline selon la revendication 1, caractérisés en ce que les noyaux M sont non substitués ou substitués par des radicaux chloro, bromo, méthyle, éthyle, méthoxy et/ou éthoxy.

3. Pigments de bis-iso-indoline selon l'une ou l'autre des revendications 1 et 2, caractérisés en ce que les deux restes A sont identiques.

4. Pigments de bis-iso-indoline selon la revendication 1, caractérisés par la formule:

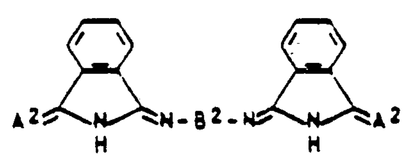

dans laquelle les restes $A^2$ sont des restes identiques ou différents de formule:

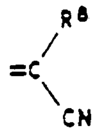 , 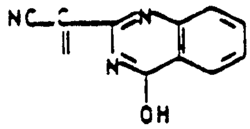 , 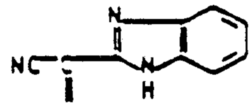 ou 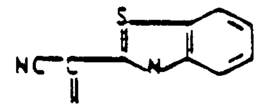

et $B^2$ est mis pour un reste 1,4- ou 1,3-phénylène éventuellement substitué par des radicaux méthyle, éthyle, méthoxy, éthoxy, chloro ou bromo, $R^8$ représentant un groupement cyano, carbamoyle, N-méthylcarbamoyle, N-éthylcarbamoyle ou phénylcarbamoyle substitué par des radicaux chloro, bromo, méthyle, méthoxy ou méthoxycarbonyle.

5. Pigments de bis-iso-indoline selon la revendication 4, caractérisés en ce que les restes $A^2$ sont identiques.

6. Pigments de bis-iso-indoline selon la revendication 1, caractérisés par la formule

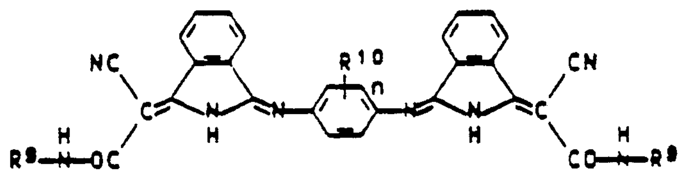

dans laquelle $R^9$ représente un groupement méthyle ou éthyle, $R^{10}$ un radical méthyle, éthyle, méthoxy, éthoxy ou chloro et n est mis pour 0, 1 ou 2, et où pour $n = 2$, les restes $R^{10}$ peuvent être identiques ou différents.

7. Utilisation des pigments de bis-iso-indoline selon les revendications 1 à 6, pour la pigmentation de matières plastiques, d'encres d'imprimerie et de laques.